# EUROPÄISCHE PATENTANMELDUNG

(11) **EP 0 714 016 A2**
(43) Veröffentlichungstag der Anmeldung: **29.05.1996**
(21) Anmeldenummer: 95118286.4
(22) Anmeldetag: 21.11.1995
(51) Int. Cl.: G01G 19/24, G01G 11/08, G01G 13/18

(54) **Behälter, insbesondere mit flexiblem Innenteil**

(30) Priorität: 25.11.1994 DE 4441969
(71) Anmelder: FILTERWERK MANN & HUMMEL GmbH, D-71638 Ludwigsburg (DE)
(72) Erfinder: Brandauer, Otto, D-75417 Mühlacker (DE)
(74) Vertreter: Aldag, Wolfgang, Dipl.-Ing.

(57) **Zusammenfassung**

Die Erfindung betrifft einen Behälter, insbesondere mit einem flexiblen Wiegebehälter (1) als Innenteil, wobei der Wiegebehälter (1) über mindestens eine Wägezelle (4) an einem Gestell (5) gehalten ist. Zum Einwiegen von beispielsweise Dosiergut ist eine Quetschvorrichtung (10) am unteren Ende des Wiegebehälters (1) vorhanden. Um aufwendige Verteileranordnungen zu vermeiden und eine exakte Dosierung zu gewährleissten ist der flexible Wiegebehälter (1) schlauchförmig durch die Quetschvorrichtung (10) weiter nach unten verlängert und auf einem beweglichen Stutzen (13) gehalten, wobei der Stutzen (13) derart verschiebbar ist, daß die flexible, schlauchförmige Verlängerung (12) des Wiegebehälters (1) mitgeführt wird und jeweils unterschiedliche Ausgänge (A,B) des Behälters beschickbar sind.

## Beschreibung

Die Erfindung betrifft einen Behälter, insbesondere mit flexiblem Innenteil nach dem Oberbegriff des Hauptanspruchs.

### Stand der Technik

Es sind bereits Behälter für Dosiervorrichtungen bekannt, bei denen ein flexibler Wiegebehälter als Innenteil und ein Fallrohrsystem aus einem sehr strapazierfähigen Kunststoff und/oder Kautschukmaterial hergestellt sind. Bei der Aufbereitung von Schüttgütern, beispielsweise von PVC, müssen häufig Mischungen gebildet werden, die aus genau vorgegebenen Komponentenmengen bestehen. Das exakte Einwiegen und die vollständige Befüllung und Entleerung der Dosiervorrichtung ist hierbei die Voraussetzung für eine hohe Produktqualität.

Es ist weiterhin Stand der Technik, daß zur Bildung des Schüttgutgemisches diskontinuierlich arbeitende Mischer in Verbindung mit Behälterwaagen eingesetzt werden. In diese Behälterwaagen werden alle Komponenten einer bestimmten Rezeptur des Schüttgutes separat eingewogen. Hierbei ist es neben einer genauen Dosierung der Komponenten von entscheidender Bedeutung, daß die eingewogenen Komponenten, wie schon erwähnt, restlos aus der Behälterwaage wieder entfernt werden. Vor allem bei der Verwendung von feinkörnigem Pulver oder stark adhäsiven Komponenten sind flexible Wiegebehälter im Gegensatz zu metallischen oder sonstigen starren Behältern leichter zu entleeren, da an den bewegbaren Behälterwänden ein Festbacken oder -kleben durch die Bewegungen des flexiblen Wiegebehälters nahezu ausgeschlossen ist.

Bei den bekannten Dosiervorrichtungen werden die eingewogenen Komponenten in der Regel einem oder mehreren Mischern in freiem Fall zugegeben, wobei auch die notwendigen Fallrohre aus den oben beschriebenen Gründen flexibel ausgeführt sein können. Wenn mehr als ein Mischer Verwendung findet, so ist es notwendig, unterhalb des Auslaufs des Wiegebehälters Verteilerelemente in Form von Drehklappen oder Rohrweichen vorzusehen, die aufgrund ihres relativ aufwendigen mechanischen Aufbaus mit einer zusätzlich benötigten Bauhöhe in der Regel aus Metall hergestellt sind. Nachteilig ist hier weiterhin, daß eine mehr oder minder starke Umlenkung des Schüttgutstromes bewirkt wird, was ein Anbacken oder -kleben von Schüttgutmaterial am Verteilerelement begünstigt.

Der Erfindung liegt die Aufgabe zugrunde, einen Behälter der eingangs angegebenen Art so fortzubilden, daß bei einfachen Aufbau eine störungsfreie Beschickung auf wenigstens zwei Verbraucher gewährleistet ist.

### Vorteile der Erfindung

Der erfindungsgemäße Behälter mit einem flexiblen Innenteil löst die gestellte Aufgabe mit den im Kennzeichen des Hauptanspruchs angegebenen Merkmalen.

Besonders günstig bei dem erfindungsgemäßen Behälter ist, daß die durch eine Verwendung von flexiblen Innenteilen als Wiegebehälter gewonnen Vorteile auch weiterhin erhalten bleiben und mit einer zusätzlichen Vereinfachung der mechanischen Verteilvorgängen, beispielsweise bei Dosiervorrichtungen, einhergeht. Mit der schlauchförmigen Verlängerung durch die Quetschvorrichtung des Wiegebehälters hindurch ist eine flexible und leicht zu bedienende Verteileranordnung am Ausgang des Behälters geschaffen, die kostengünstig herzustellen und darüberhinaus auch leicht auswechselbar ist.

Mit den in den Unteransprüchen angegebenen Weiterbildungen des erfindungsgemäßen Behälters kann auf einfache Weise die Verschiebung des Stutzens mitsamt dem Auslauf des flexiblen Wiegebehälters als Innenteil vorgenommen werden.

Besonders vorteilhaft werden die erforderlichen Bewegungen im Behälter mit Druckluftzylindern ausgeführt, die eine sehr genaue und zuverlässige Positionierung des Stutzens wie auch eine einfache Betätigung der Quetschvorrichtung ermöglichen. Zusätzlich kann hiermit auch ein Rütteln des flexiblen Wiegebehälters durchgeführt werden, um sicherzustellen, daß der Behälter vollständig entleert wird.

### Zeichnung

Ein Ausführungsbeispiel des erfindungsgemäßen Behälters wird anhand der Zeichnung erläutert. Es zeigen:
Figur 1 eine Schnittdarstellung einer Dosiervorrichtung als Behälter mit einem flexiblen Innenteil als Wiegebehälter und einer flexiblen Verteileranordnung und
Figur 2 einen Schnitt durch den Wiegebehälter bei einer Entleerung der Dosiervorrichtung.

### Beschreibung des Ausführungsbeispiels

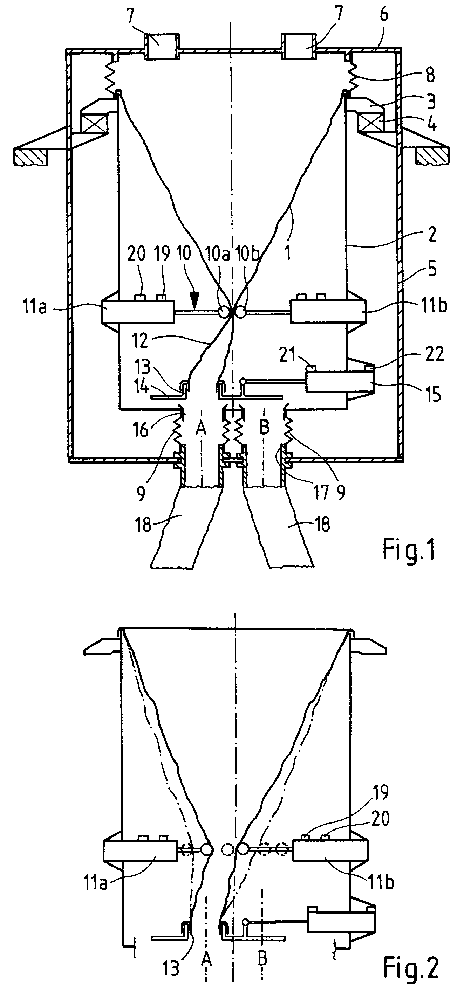

In Figur 1 ist ein flexibler Wiegebehälter 1 als Innenteil eines Behälters dargestellt, wobei der Wiegebehälter 1 an einem festen Wägerahmen 2, beispielsweise aus Metall, aufgehängt ist. Der Wägerahmen 2 ist bei diesem Ausführungsbeispiel über drei Pratzen 3 an ebenfalls drei Wägezellen 4 gehalten. Die Wägezellen 4 sind fest mit einem Gestell 5 verbunden, das mitsamt einer Abdeckung 6 die äußere Ummantelung des gesamten Behälters, der beispielsweise als Dosiervorrichtung Verwendung findet, darstellt.

In der vorzugsweise metallischen Abdeckung 6 sind Einlaufstutzen 7 für die zu dosierenden Schüttgutkomponenten vorhanden, über die dieses Dosiergut eingebracht wird und dann im Wiegebehälter 1 zu liegen kommt. Eine staubdichte und flexible Verbindung zwischen dem Gestell 5 und dem Wägerahmen 2 wird durch flexible Manschetten 8 im Einlaufbereich und ebenfalls flexible Manschetten 9 im Auslaufbereich gewährleistet. Die Beschickung dieses Behälters mit dem Dosiergut erfolgt hierbei in bekannter Weise mittels Dosierschnecken oder Dosierrinnen.

Zum Einwiegen des Schüttgutes wird der Wiegebehälter 1 über eine Quetschvorrichtung 10 verschlossen. Diese Quetschvorrichtung 10 weist zwei Rollen 10a und 10b auf, die an Kolben von Druckluftzylindern 11a und 11b gehalten sind. Mit diesen Druckluftzylindern 11a und 11b kann eine horizontale Bewegung der Rollen 10a und 10b bewirkt werden, die zum Verschluß oder zum Öffnen der Quetschvorrichtung 10 führt.

Am unteren Ausgang des Wiegebehälters 1 ist eine schlauchförmige Verlängerung 12 vorhanden, die über einen beweglichen Stutzen 13 gespannt ist. Dieser Stutzen 13 ist auf einer verschiebbaren Platte 14 befestigt, bzw. ist Bestandteil dieser Platte 14. Die Platte 14 ist an einem Kolben eines weiteren Druckluftzylinders 15 gehalten und über diesen jeweils in eine Stellung A oder in eine Stellung B zu verschieben und in diesen Stellungen fixierbar. Die Stellungen A und B sind jeweils verschiedenen Auslaufstutzen 16 des Wägerahmens 2 zugeordnet, wobei diese über die Manschetten 9 mit Ausgängen 17 des Gestells 5 und Fallrohren 18 flexibel verbunden sind. Diese Fallrohre 18 führen zu hier nicht dargestellten Mischeinrichtungen.

Beim Einwiegen des Dosiergutes befinden sich die Druckluftzylinder 11a und 11b in einem ausgefahrenen Zustand und verschließen über die Rollen 10a und 10b den flexiblen Wiegebehälter 1, sodaß zunächst kein Dosiergut entweichen kann. Der Stutzen 13 befindet sich hierbei in einer der Stellungen A oder B, je nach der vorgegebenen Rezeptur. Die Stellung des Stutzens 13 bzw. der beweglichen Platte 14 wird über am Druckluftzylinder 15 angebrachte Näherungsindikatoren 21 und 22 detektiert. Nach dem Abschluß der Wiegeprozedur wird der Wiegebehälter 1 entleert indem die Rollen 10a und 10b vom Behälter 1 wegbewegt werden.

Zur Verdeutlichung des Entleerungsvorgangs wird auf Figur 2 verwiesen, wo insbesondere das Hin- und Herbewegen der Rollen 10a und 10b erkennbar ist. Die beiden Druckluftzylinder 11a und 11b werden hierbei so aktiviert, daß sie mehrmals zwischen extremer Rückstellung und Mittenstellung (Druckluftzylinder 11a) sowie extremer Ausfahrstellung und Mittenstellung (Druckluftzylinder 11b) hin und herbewegt werden.

Bei der Darstellung nach der Figur 2 ist ein Auslaufen des Dosiergutes in der Stellung A gezeigt, wobei nach einem Verschieben des Stutzens 13 in die Stellung B eine entsprechend angepaßte Vorgehensweise bei der Rüttlung durchgeführt wird. Es wird somit der jeweils dem angesteuerten Auslauf naheliegende Druckluftzylinder nicht bis in die volle Ausfahrstellung aktiviert und der gegenüberliegende Druckluftzylinder nicht bis in die volle Rückstellung.

Die jeweilige Detektierung der Stellungen der Druckluftzylinder 11a und 11b erfolgt über Näherungsindikatoren 19 und 20, wobei die Ausgangssignale dieser Näherungsindikatoren 19 und 20 in einer hier nicht dargestellten Steuerungseinheit verarbeitet werden. Durch diese Rüttlung des flexiblen Wiegebehälters 1 werden somit Materialanbackungen an den Behälterwänden verhindert oder sofort gelöst und ein kontinuierliches Auslaufen des Dosiergutes gewährleistet.

## Patentansprüche

1. Behälter, insbesondere mit einem flexiblen Innenteil
- das über mindestens eine Wägezelle (4) an einem Gestell (5) gehalten ist, zur Aufnahme eines Schüttgutes und mit
- einer Quetschvorrichtung (10) am unteren Ende des Innenteils zum Verschließen des Auslaufs,
**dadurch gekennzeichnet, daß**
- das flexible Innenteil (1) schlauchförmig durch die Quetschvorrichtung (10) weiter nach unten verlängert und auf einem beweglichen Stutzen (13) gehalten ist, wobei
der Stutzen (13) derart verschiebbar ist, daß die flexible, schlauchförmige Verlängerung (12) des Innenteils (1) mitgeführt wird und daß jeweils unterschiedliche Ausgänge (A,B) des Behälters beschickbar sind.

2. Behälter nach Anspruch 1,
**dadurch gekennzeichnet, daß**
- sich der bewegliche Stutzen (13) auf einer transversal verschiebbaren Platte (14) befindet, die in mindestens zwei vorgegebenen, jeweils unterschiedlichen Ausgängen zugeordneten, Auslaufstellungen (A,B) fixierbar ist.

3. Behälter nach Anspruch 1,
**dadurch gekennzeichnet, daß**
- sich der bewegliche Stutzen (13) auf einer drehbaren Platte befindet, die in mindestens zwei vorgegebenen, jeweils unterschiedlichen Ausgängen zugeordneten Auslaufstellungen (A,B) fixierbar ist.

4. Behälter nach einem der Ansprüche 1 bis 3,
**dadurch gekennzeichnet, daß**
- der bewegliche Stutzen (13) an einem Kolben eines Druckluftzylinders (15) gehalten ist, mit dem die Verschiebung des Stutzens (13) bewirkt wird.

5. Behälter nach einem der Ansprüche 1 bis 4,
**dadurch gekennzeichnet, daß**
- die Quetschvorrichtung (10) über mindestens zwei Druckluftzylinder (11a,11b) aktivierbar ist und daß beim Öffnen der Quetschvorrichtung (10) mit diesen Druckluftzylindern (11a,11b) eine rüttelnde Aktivierung des flexiblen Innenteils (1) vorgenommen wird.

6. Behälter nach Anspruch 4 oder 5,
**dadurch gekennzeichnet, daß**
- die Stellungen der Kolben der Druckluftzylinder (11a,11b,15) über Näherungsindikatoren (19,20,21,22) detektierbar sind.

7. Behälter nach einem der Ansprüche 1 bis 6,
**dadurch gekennzeichnet, daß**
- das flexible Innenteil (1) an seinem oberen Ende und an den mindestens zwei Ausgängen (16) über flexible Manschetten (8,9) an dem Gestell (5) des Behälters gehalten ist.
